# EUROPÄISCHE PATENTSCHRIFT

(11) **EP 2 700 074 B1**
(45) Veröffentlichungstag und Bekanntmachung des Hinweises auf die Patenterteilung: **28.10.2015**
(21) Anmeldenummer: 12717272.4
(22) Anmeldetag: 23.04.2012
(51) Int. Cl.: G21C 9/00, G21C 11/00, G21C 19/07, G21D 1/00, G21F 7/00

(54) **Kerntechnische Anlage**
Nuclear plant
Installation nucléaire

(30) Priorität: 21.04.2011 DE 102011002232
(43) Veröffentlichungstag der Anmeldung: 26.02.2014
(73) Patentinhaber: Siempelkamp Nukleartechnik GmbH, 47803 Krefeld (DE)
(72) Erfinder: KUPKE, Peter, 21483 Krüzen (DE); KLUTE, Stefan, 69115 Heidelberg (DE); THOMAS, Andreas, 01277 Dresden (DE)
(74) Vertreter: von dem Borne, Andreas
(86) Internationale Anmeldenummer: PCT/EP2012/057373
(87) Internationale Veröffentlichungsnummer: WO 2012/143553

(56) Entgegenhaltungen:
- DE-A1- 2 909 549
- DE-A1-102008 023 658
- DE-A1-102009 037 781
- GB-A- 1 393 439
- US-A- 4 713 199

## Beschreibung

Die Erfindung betrifft eine kerntechnische Anlage, insbesondere Kernreaktoranlage oder Wiederaufarbeitungsanlage, mit einem Gebäude und einem innerhalb des Gebäudes unterhalb einer Gebäudedecke angeordneten Lagerbecken, in welchem Brennelemente gelagert sind.

Bei einer solchen kerntechnischen Anlage kann es sich z.B. um eine Kernreaktoranlage handeln, welche neben dem eigentlichen Kernreaktor in der Regel ein Lagerbecken für verbrauchte Brennelemente aufweist. In diesem Lagerbecken werden die Brennelemente unter Wasser gelagert. Bei der kerntechnischen Anlage kann es sich aber auch um eine Wiederaufarbeitungsanlage handeln, welche ebenfalls mit einem derartigen Brennelement-Lagerbecken ausgerüstet ist.

Bei der Konzeption von kerntechnischen Anlagen und insbesondere Kernreaktoranlagen kommt der Sicherheit und den damit verbundenen Maßnahmen besondere Bedeutung zu. Kerntechnische Anlagen besitzen daher eine Reihe von Sicherheitsmaßnahmen bzw. Sicherheitsbarrieren, die zum einen die Strahlung abschirmen und zum anderen das Austreten radioaktiver Stoffe verhindern. Dazu zählt im Falle einer Kernreaktoranlage, insbesondere im Falle eines Siedewasserreaktors, neben dem Reaktordruckgefäß und gegebenenfalls einer Abschirmung aus Stahlbeton, welche das Reaktordruckgefäß umgibt, insbesondere der Sicherheitsbehälter, welcher in der Regel aus Stahl gefertigt ist. Oberhalb des Sicherheitsbehälters befindet sich in der Regel ein Flutraum, welcher während eines Brennstabwechsels zu Abschirmzwecken mit Wasser geflutet wird, so dass die verbrauchten Brennelemente unter Wasser entladen und in das Brennelement-Lagerbecken überführt werden. Die Öffnung, die sich in der Regel am Boden des Flutraumes befindet, ist während des Betriebes z.B. mit Abschirmriegeln abgedeckt. Während die beschriebenen Maßnahmen insbesondere der Abschirmung der radioaktiven Strahlung dienen, schützt das Reaktorgebäude, welches die beschriebene Anordnung vollständig umgibt, insbesondere vor äußeren Einwirkungen, wie z.B. Erdbeben, Druckwellen oder auch vor einem Flugzeugabsturz.

In diesem Zusammenhang besteht das Bedürfnis, die Sicherheit stets weiter zu verbessern. Aus diesem Grunde wurde bereits vorgeschlagen, in dem Flutraum eine den Sicherheitsbehälter und/oder den Reaktorbehälter überspannende Schutzhaube anzuordnen, welche den Sicherheitsbehälter und den darunter liegenden Reaktorbehälter im Falle einer Beschädigung des Reaktorgebäudes vor herabfallenden Gebäudetrümmerteilen und/oder anderen Trümmerteilen, z.B. Flugzeugteilen, schützt. Eine solche Schutzhaube ist in der Regel im Bereich des Flutraumbodens angeordnet. Sie deckt eine oberhalb des Sicherheitsbehälters angeordnete Öffnung des Flutraumbodens ab (vgl. DE 10 2009 037 781 A1). Während diese Maßnahmen insbesondere den Bereich des Reaktors selbst betreffen, besteht grundsätzlich auch das Bedürfnis, die Sicherheit im Zusammenhang mit dem Brennelement-Lagerbecken zu erhöhen. Dieses gilt nicht nur für Lagerbecken von Siedewasserreaktoren, sondern für Lagerbecken beliebiger Reaktortypen und auch andere kerntechnische Anlagen, z.B. Wiederaufarbeitungsanlagen.

Aus der DE 2 909 549 A1 ist eine kerntechnische Anlage, nämlich ein Brennelementelager mit einer gegen Strahlung schützenden Decke bekannt, wobei die Decke in einem bestimmten Abstand parallel über dem Boden angeordnet ist. Dabei ist die Decke auf einer Auflagefläche innerhalb einer Betonummantelung abgestützt und aufgesetzt auf Stützelemente mit dem als Tragrahmen ausgebildeten Boden verbunden. Die Decke kann aus mehreren vorgefertigten Stahlteilen zusammengesetzt sein, die über Verbindungselemente zusammengehalten sind, wobei zwischen den Stahlteilen verschließbare Beladungs- und Entladungsöffnungen für die Lagerschächte angeordnet sind. Die Zwischenräume der Decke sind mit einem Strahlenschutzmaterial ausgefüllt, welches aus Beton oder einem anderen körnigen Strahlenschutzmaterial besteht.

Der Erfindung liegt die Aufgabe zugrunde, eine kerntechnische Anlage, z.B. Kernreaktoranlage oder Wiederaufarbeitungsanlage mit einem Brennelement-Lagerbecken zu schaffen, welche sich durch eine erhöhte Sicherheit gegen äußere Einflüsse, insbesondere im Falle eines Flugzeugabsturzes, auszeichnet.

Zur Lösung dieser Aufgabe lehrt die Erfindung eine kerntechnische Anlage mit den Merkmalen des Anspruches 1. Dabei ist vorgesehen, dass unterhalb der Gebäudedecke und oberhalb des Lagerbeckens eine das Lagerbecken überspannende Schutzhaube angeordnet ist, welche das Lagerbecken und die darin gelagerten Brennelemente im Falle einer Beschädigung des Gebäudes vor herabfallenden Trümmerteilen, insbesondere Gebäudetrümmerteilen, schützt.

Die Erfindung geht dabei zunächst einmal von der Erkenntnis aus, dass die Gebäude von kerntechnischen Anlagen selbst sehr stabil aufgebaut sind und z.B. den Reaktor oder auch ein Brennelement-Lagerbecken in der Regel auch vor einem Flugzeugabsturz schützen, dass jedoch in einem solchen Fall eine besondere Gefahr von herabstürzenden Gebäudetrümmerteilen oder gegebenenfalls auch von anderen Trümmerteilen ausgehen kann. Aus diesem Grunde schlägt die Erfindung vor, das Brennelement-Lagerbecken und folglich auch die darin angeordneten Brennelemente zuverlässig vor derartigen herabstürzenden Gebäudetrümmerteilen sowie anderen Trümmerteilen, z.B. Flugzeugteilen zu schützen, indem das Brennelement-Lagerbecken mit einer sehr stabilen Schutzhaube abgedeckt wird, welche Gebäudetrümmerteilen mit hohem Gewicht standhält. Dabei handelt es sich in der Praxis insbesondere um schwere Trümmerteile, z.B. Betonteile und/oder Stahlteile mit einem Gewicht von 50 bis 100 Tonnen, z.B. Betonbinder, welche in die Deckenkonstruktion eines Gebäudes, z.B. Reaktorgebäudes, oder auch eines Gebäudes einer Wiederaufarbeitungsanlage integriert sind. Falls bei einem Flugzeugabsturz ein derartiger Betonbinder oder andere schwere Trümmerteile in den Bereich des Brennelement-Lagerbeckens herabfallen, so werden diese von der erfindungsgemäßen Schutzhaube abgebremst und aufgenommen, so dass die Trümmerteile nicht in den Bereich des Brennelement-Lagerbeckens und folglich auch nicht in den Bereich der darin gelagerten (verbrauchten) Brennelemente vordringen können. Die Erfindung geht dabei insbesondere von der Erkenntnis aus, dass es nicht ausreicht, den Reaktor selbst gegen äußere Einwirkungen zu schützen, sondern dass auch von den (verbrauchten) Brennelementen im Brennelement-Lagerbecken bzw. Abklingbecken eine hohe Gefahr ausgehen kann, so dass umfassender Schutz zu gewährleisten ist. Die Erfindung umfasst dabei Reaktorgebäude mit integriertem Brennelement-Lager, bei welchem die Lagerbecken in das Reaktorgebäude integriert sind. Die Erfindung umfasst außerdem Kernreaktoranlagen mit ausgelagertem Brennelement-Lager, bei denen das Brennelement-Lager in einem separaten Brennelement-Nasslagergebäude angeordnet ist. Außerdem umfasst die Erfindung Wiederaufarbeitungsanlagen, bei denen ebenfalls innerhalb eines Gebäudes, z.B. eines Brennelement-Lagergebäudes ein Brennelement-Lagerbecken angeordnet ist.

Bevorzugt ist die Schutzhaube im Bereich des Beckenflures angeordnet, wobei es eine obere Öffnung des Lagerbeckens abdeckt. Beckenflur meint folglich die oberhalb des eigentlichen Lagerbeckens angeordnete (befahrbare) Gebäudeebene, unterhalb der das Lagerbecken angeordnet ist und von welcher aus das Lagerbecken mit Brennelementen befüllt bzw. entleert wird.

Es ist vorgesehen, dass die Schutzhaube (in der Draufsicht) mehrteilig ausgebildet ist und aus mehreren einzeln transportierbaren Segmenten besteht, welche innerhalb des Gebäudes zu der Schutzhaube zusammensetzbar sind. Dabei geht die Erfindung von der Erkenntnis aus, dass die Schutzhaube in der Praxis einen Durchmesser (bzw. eine Breite und/oder Länge) von mehreren Metern, z. B. 5 m bis 20 m, vorzugsweise 7 m bis 12 m, aufweist. Um die Schutzhaube auf verhältnismäßig einfache Weise durch die Schleusen des Gebäudes in das Innere transportieren zu können, empfiehlt sich ein segmentartiger Aufbau. Dieses bietet darüber hinaus den Vorteil, dass das Gewicht der einzelnen Segmente die zulässigen Höchstgewichte der im Reaktor eingesetzten Krananlagen nicht überschreitet. Denn um die gewünschte Schutzfunktion erfüllen zu können, weist die erfindungsgemäße Schutzhaube ein verhältnismäßig hohes Eigengewicht von insgesamt 30 Tonnen bis 140 Tonnen, vorzugsweise etwa 40 Tonnen bis 80 Tonnen, auf.

Weiter ist vorgesehen, dass die Schutzhaube, z. B. deren einzelne Segmente, (jeweils) aus einer Vielzahl von miteinander verbundenen (z.B. verschweißten und/oder verschraubten) Stahlträgern besteht/bestehen. Die Schutzhaube wird folglich von einer sehr stabilen Gitterkonstruktion aus Stahlträgern gebildet, welche einerseits die kinetische Energie des herabfallenden Gebäudetrümmerteils aufnehmen und andererseits verhindern, dass das Gebäudetrümmerteil durch die Schutzhaube hindurch in den Bereich des Brennelement-Lagerbeckens dringt. Das Gebäudetrümmerteil deformiert in der Regel die Schutzhaube, z.B. die Stahlträger, und bleibt dann auf den Stahlträgern liegen. Vorzugsweise sind mehrere parallel zueinander angeordnete Längsträger vorgesehen, die sich über die gesamte Breite bzw. Länge der Schutzhaube oder eines Segments oder eines Segmentteils erstrecken. Jeweils zwei benachbarte Längsträger sind über mehrere quer dazu verlaufende Verbindungsträger miteinander verbunden. Bevorzugt sind die Längsträger einerseits und die Verbindungsträger andererseits miteinander verschweißt und/oder verschraubt. Die Stahlträger sind z. B. als I-Träger bzw. Doppel-T-Träger, vorzugsweise als Breitflanschträger ausgebildet. Diese Breitflanschträger können eine Breite von 200 mm bis 600 mm, z. B. 300 mm, und eine Höhe von 700 mm bis 1200 mm, z. B. 1000 mm, aufweisen. Die Stegdicke beträgt vorzugsweise 15 mm bis 40 mm und die Flanschdicke beträgt vorzugsweise 20 mm bis 80 mm. Die beschriebene Gitterkonstruktion aus derartigen Breitflanschträgern gewährleistet ein hohes Maß an Sicherheit selbst bei schweren herabfallenden Gebäudetrümmerteilen, z B. Betonbindern oder auch Stahlteilen.

Ergänzend schlägt die Erfindung vor, dass die Schutzhaube auf der Oberseite und/oder Unterseite eine die Stahlträger überspannende Deckplatte aufweist, welche vorzugsweise als Stahlplatte mit einer Dicke von 10 mm bis 30 mm ausgebildet ist. Diese Stahlplatte erhöht die Stabilität, soll dabei jedoch nicht selbst den herabfallenden Betonbindern standhalten, sondern insbesondere auch vor Kleinteilen schützen.

Die Schutzhaube kann unterseitig eine Stützkonstruktion aufweisen oder auf eine Stützkonstruktion aufgesetzt sein, welche die Öffnung des Lagerbeckens (bereichsweise) umgibt. Diese Stützkonstruktion kann als vollständig ringförmige Stützkonstruktion ausgebildet sein oder auch lediglich bereichsweise auf gegenüberliegenden Seiten des Lagerbeckens angeordnet sein. Bevorzugt weist die Stützkonstruktion einen Bodenrahmen oder Bodenträger auf, auf bzw. an welchem mehrere über den Umfang verteilte Stützpfeiler befestigt sind, auf welchen wiederum die Schutzhaube aufgesetzt wird/ist. Schutzhaube und Stützkonstruktion können auch fest miteinander verbunden und dann gemeinsam bzw. als Ganzes im Bereich des Brennelement-Lagerbeckens montiert werden. Es besteht jedoch auch die Möglichkeit, eine separate Stützkonstruktion im Bereich des Lagerbeckens vorzusehen und dann eine Schutzhaube ohne eine derartige Stützkonstruktion auf diese Stützkonstruktion aufzusetzen.

Die Auslegung der Schutzhaube (ggf. mit Stützkonstruktion) wird dabei so getroffen, dass die Struktur dem Aufschlag eines Trümmerteils, z.B. eines Betonbinders standhält, der entweder mittig auf einen Längsträger oder aber auch einen Querträger oder aber auch im Randbereich der Konstruktion auftreffen kann. Dabei geht die Erfindung von der Erkenntnis aus, dass ein Trümmerteil mit einem Gewicht von 50 bis 100 Tonnen (z. B. 70 bis 80 Tonnen) und mit einer Geschwindigkeit von 10 m/s bis 20 m/s auftrifft.

Die gegebenenfalls aus mehreren Segmenten zusammengesetzte Schutzhaube kann vorzugsweise mehreckig, z.B. viereckig ausgebildet sein. Sie kann z.B. rechteckig oder quadratisch ausgebildet sein. Dabei wird vorzugsweise eine Anpassung an die räumlichen Gegebenheiten getroffen. Insgesamt geht die Erfindung von der Erkenntnis aus, dass die erfindungsgemäße Schutzhaube nicht nur bei einem Neubau eines Reaktors oder einer Wiederaufarbeitungsanlage berücksichtigt wird, sondern auch in bestehende Anlagen zur Erhöhung der Sicherheit integriert werden kann.

In einer bevorzugten Ausführungsform besteht die Schutzhaube aus mehreren Segmenten, d.h. zumindest zwei, vorzugsweise drei Segmenten, die mittels Formschlusselementen miteinander verbunden werden. Bei diesen Formschlusselementen kann es sich z.B. um U-förmige Verbindungsklammern handeln, welche in sehr stabiler Ausführungsform z.B. aus Stahl-Kastenprofilen zusammengeschweißt oder aus massivem Stahl einstückig gefertigt sind. Die einzelnen Segmente der Schutzhaube können folglich in den Bereich des Lagerbeckens transportiert und auf das Lagerbecken aufgesetzt werden. Anschließend werden die einzelnen Segmente über die Formschlusselemente miteinander verbunden, wobei diese Verbindung die einzelnen Segmente unter Bildung der Schutzhaube fest oberhalb des Lagerbeckens zusammenhält, ohne dass jedoch ein gemeinsamer Transport der Segmente in einem Stück erforderlich ist. Dazu können die einzelnen Segmente Einstecköffnungen bzw. Einsteckkammern für die Verbindungsklammern aufweisen. Diese Einstecköffnungen bzw. Aufnahmen für die Klammern können wiederum von Stahl-Kastenprofilen gebildet werden, welche sich über die Höhe bzw. Dicke und quer zur Schutzhaubenebene erstrecken. Alternativ liegt es jedoch auch im Rahmen der Erfindung, die einzelnen Segmente miteinander zu verschrauben. Der Ausführungsform mit den formschlüssigen Verbindungsklammern kommt jedoch besondere Bedeutung zu, da die Montage und Demontage dadurch vereinfacht wird.

Die einzelnen Segmente selbst können jeweils wiederum aus einzelnen Teilsegmenten bestehen, z.B. jeweils aus zwei Teilsegmenten, welche vorzugsweise miteinander verschraubt werden. Es besteht folglich die Möglichkeit, zunächst die einzelnen Teilsegmente als verschweißte und/oder verschraubte Gitterkonstruktion der beschriebenen Art herzustellen. Anschließend lassen sich z.B. jeweils zwei Teilsegmente zu einem Segment zusammenfassen, vorzugsweise durch Verschraubung. Anschließend können dann die so gebildeten Segmente mit Hilfe der formschlüssigen Verbindungsklammern zu der Schutzhaube vereint werden.

Weiter schlägt die Erfindung vor, dass die Schutzhaube, z.B. deren Segmente, mit Füllöffnungen versehen sind, durch welche das Lagerbecken mit Wasser befüllbar ist. Auf diese Weise soll insbesondere ein Nachfüllen des Brennelement-Lagerbeckens bei Wasserverlust realisierbar sein. Es können eine oder auch mehrere Füllöffnungen vorgesehen sein. Diese können z.B. seitlich an der Haube angeordnet sein.

Ferner ist die Schutzhaube in besonders bevorzugter Ausführungsform mit einem oder mehreren Wasserstoff-Rekombinatoren ausgerüstet. Bevorzugt handelt es sich um passive Wasserstoff-Rekombinatoren, die in die Schutzhaube integriert sein können. Sie dienen dazu, gasförmigen Wasserstoff katalytisch mit umgebendem Sauerstoff zu Wasser zu oxidieren und so die Wasserstoffkonzentration zu minimieren. Sie können in die Hohlräume, d.h. gleichsam in die Wabenstruktur der Haube integriert sein.

Ferner besteht die Möglichkeit, die Schutzhaube, z. B. deren Segmente, mit Instrumentierungsöffnungen zu versehen, in welche bzw. durch welche Messvorrichtungen einführbar sind. Damit besteht die Möglichkeit, das Brennelement-Lagerbecken mit geeigneter Sensorik zu überwachen. So können beispielsweise Unterwasserkameras eingeführt werden. Ferner können Temperatursensoren und/oder Füllstandssensoren eingeführt werden, um die Temperatur und den Füllstand bzw. das Niveau des Brennelement-Lagerbeckens zu überwachen. Außerdem können geeignete Analyseinstrumente, z.B. für eine Wasseranalyse und/oder Gasanalyse eingeführt werden.

Eine oder mehrere Öffnungen, vorzugsweise die Instrumentierungsöffnungen, können als gekammerte Öffnungen ausgebildet sein und z.B. von Kastenprofilen gebildet werden, die die Schutzhaube durchgreifen. Diese Kastenprofile können folglich zum einen die geschützten Instrumentierungsöffnungen bilden, zum anderen können die Kastenprofile die Einstecköffnungen bzw. Einsteckkammern für die Verbindungsklammern bilden. Sofern die Gitterkonstruktion mit einer Deckplatte abgedeckt ist, ist diese Deckplatte mit entsprechenden Durchbrechungen versehen, welche mit den Öffnungen, z.B. den Kastenprofilen fluchten.

Die Erfindung betrifft auch eine Schutzhaube der beschriebenen Art für eine solche Anlage. Der Schutzhaube kommt folglich besondere Bedeutung zu, so dass diese Schutzhaube auch separat unter Schutz gestellt wird.

Im Folgenden wird die Erfindung anhand einer lediglich ein Ausführungsbeispiel darstellenden Zeichnung näher erläutert. Es zeigen
- Fig. 1: einen stark vereinfachten Ausschnitt aus einer Kernreaktoranlage mit Siedewasserreaktor,
- Fig. 2: einen stark vereinfachten Ausschnitt aus einer Kernreaktoranlage mit Druckwasserreaktor,
- Fig. 3: einen stark vereinfachten Ausschnitt aus einer kerntechnischen Anlage in der Ausführungsform als Wiederaufarbeitungsanlage in perspektivischer Darstellung,

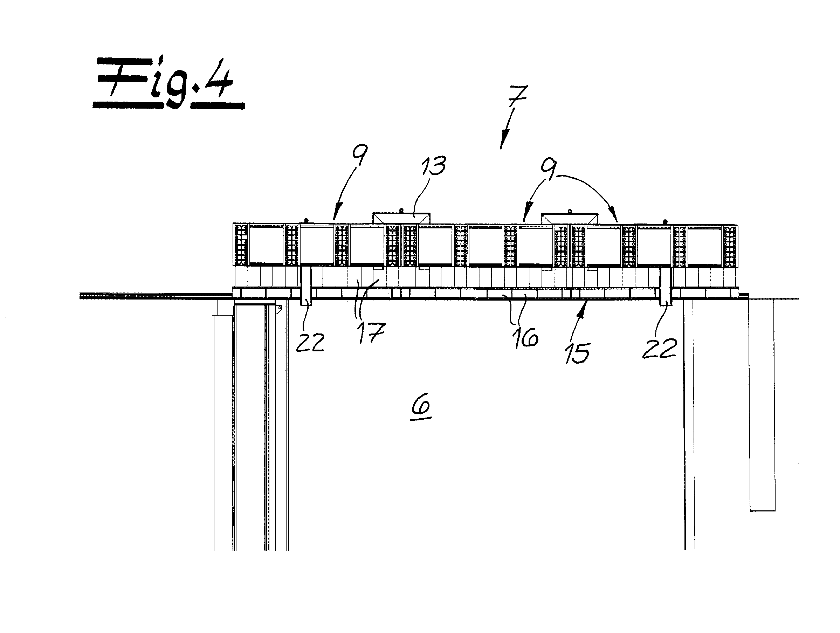

- Fig. 4: eine erfindungsgemäße Schutzhaube im Bereich eines Brennelement-Lagerbeckens einer Anlage nach den Fig. 1 bis 3,
- Fig. 5: die Schutzhaube nach Fig. 4 in einer perspektivischen Gesamtansicht (ohne Lagerbecken),
- Fig. 6: ein Teilsegment des Gegenstandes nach Fig. 5 mit teilweise geöffneter Blechabdeckung und
- Fig. 7: einen Ausschnitt aus dem Gegenstand nach Fig. 6 (Querschnitt).

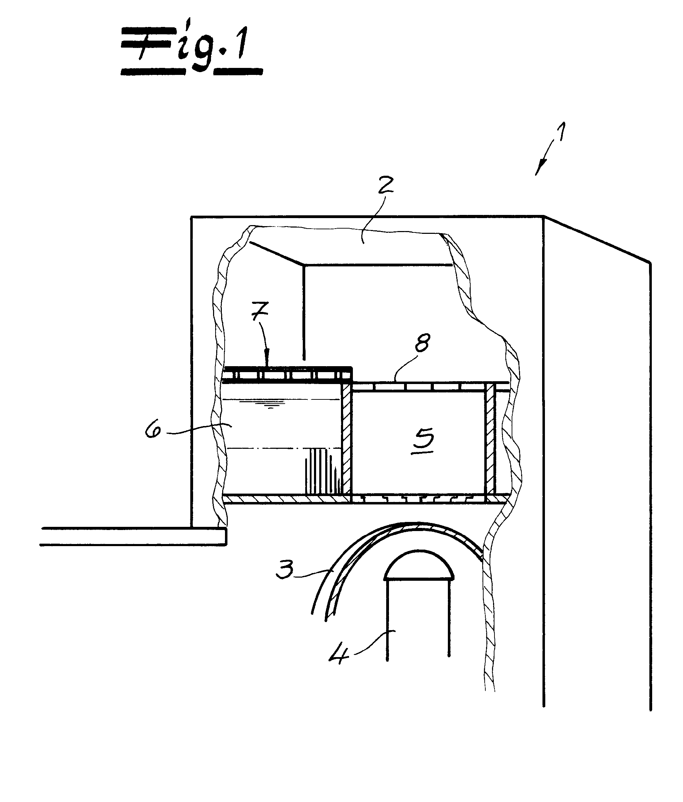

In den Fig. 1 bis 3 ist in stark vereinfachter Darstellung der grundsätzliche Aufbau verschiedener kerntechnischer Anlagen dargestellt. Fig. 1 zeigt eine Kernreaktoranlage mit Siedewasserreaktor. Es ist das Gebäude 1 als Reaktorgebäude mit Gebäudedecke 2 erkennbar. Innerhalb des Gebäudes 1 ist der Sicherheitsbehälter 3 sowie ein im Inneren des Sicherheitsbehälters 3 angeordneter Reaktorbehälter 4 erkennbar, der als Reaktordruckbehälter ausgebildet ist. Im Inneren des Reaktordruckbehälters ist der Reaktorkern angeordnet, welcher nicht dargestellt ist. Oberhalb des Sicherheitsbehälters 3 und folglich auch oberhalb des Reaktorbehälters 4 ist ein Flutraum 5 erkennbar. Der Flutraum 5 wird zumindest während eines Brennstabwechsels zu Abschirmzwecken mit Wasser geflutet. Anschließend können dann die verbrauchten Brennelemente bzw. Brennstäbe aus dem Reaktor entfernt und über den Flutraum 5 in das ebenfalls angedeutete Brennelement-Lagerbecken 6 transportiert werden. Die Erfindung befasst sich mit dem in Fig. 1 angedeuteten Brennelement-Lagerbecken 6. Denn in Fig. 1 ist erkennbar, dass unterhalb der Gebäudedecke 2 und oberhalb des Lagerbeckens 6 eine das Lagerbecken überspannende Schutzhaube 7 angeordnet ist, welche das Lagerbecken 6 und die darin gelagerten Brennelemente im Falle einer Beschädigung des Reaktorgebäudes 1 bzw. der Gebäudedecke 2 vor herabfallenden Gebäudetrümmerteilen schützt. Kommt es beispielsweise zu einem Flugzeugabsturz im Bereich des Reaktors und wird das Reaktorgebäude von dem herabstürzenden Flugzeug beschädigt, so verhindert die Schutzhaube 7, dass herabfallende Gebäudetrümmerteile, z.B. Betonbinder oder andere Teile, in das unterhalb der Schutzhaube 7 angeordnete Lagerbecken 6 eindringen und die Brennelemente bzw. das Brennelement-Lager beschädigen. Die Schutzhaube 7 ist dabei so ausgelegt, dass sie selbst schwerste Gebäudetrümmerteile, z.B. Betonbinder, mit einem Gewicht von mehr als 70 Tonnen aufnehmen kann. Die Schutzhaube 7 ist im Ausführungsbeispiel im Bereich des Beckenflures 8 angeordnet. Beckenflur meint dabei die Ebene, welche auch die Oberkante des Lagerbeckens bildet und von welcher das Lagerbecken mit Brennelementen bestückt wird. Die Schutzhaube 7 weist einen großen Durchmesser oder eine große Breite und/oder Länge von z. B. 7 m bis 10 m auf und ist an die jeweiligen Gegebenheiten angepasst.

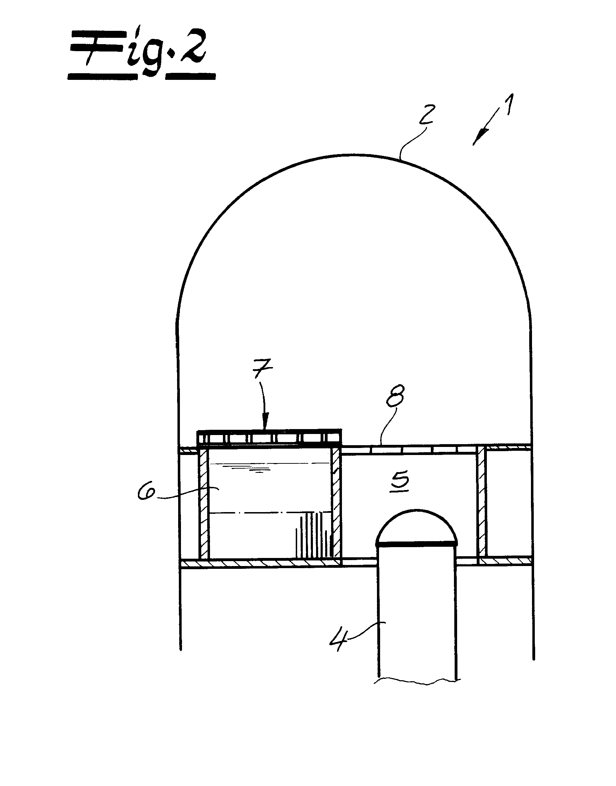

Die erfindungsgemäße Schutzhaube lässt sich in gleicher Weise bei einer Kernreaktoranlage mit Druckwasserreaktor einsetzen. Dazu wird auf Fig. 2 verwiesen. Dort ist ebenfalls neben dem Reaktor das Brennelement-Lagerbecken 6 mit Schutzhaube 7 erkennbar.

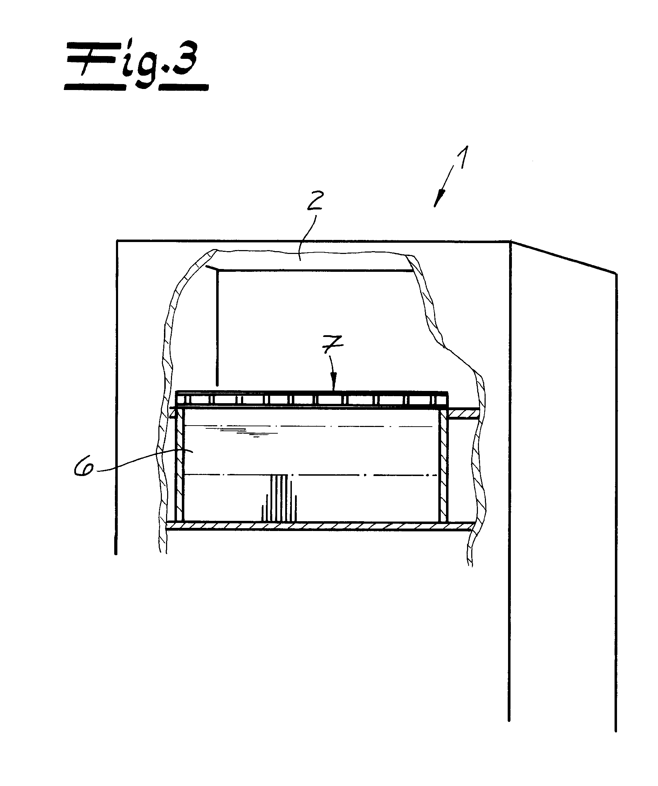

In gleicher Weise lässt sich die Erfindung auch im Bereich einer Wiederaufarbeitungsanlage realisieren. Dazu wird auf Fig. 3 verwiesen, welche ein Lagerbecken 6 für Brennelemente innerhalb einer Wiederaufarbeitungsanlage zeigt. Auch dort ist ein Gebäude 1 mit Gebäudedecke 2 und die erfindungsgemäße Schutzhaube 7 dargestellt.

Stets schützt die erfindungsgemäße Schutzhaube 7 ein Brennelement-Lagerbecken 6 und folglich das unterhalb der Schutzhaube 7 angeordnete Brennelement-Lager bzw. dessen Brennelemente.

Um die Handhabung der verhältnismäßig großen und folglich auch schweren Schutzhaube 7 zu vereinfachen und insbesondere den Transport in das jeweilige Gebäude 1 durch die gegebenenfalls vorhandenen Schleusen zu ermöglichen, ist die Schutzhaube (in der Draufsicht) mehrteilig ausgebildet und aus mehreren, einzeln transportierbaren Segmenten 9 zusammengesetzt. Diese Segmente 9 können innerhalb des Gebäudes, z.B. Reaktorgebäudes 1 zu der Schutzhaube 7 komplettiert werden.

Im Ausführungsbeispiel besteht die Schutzhaube 7 aus drei Segmenten 9, wobei jedes einzelne Segment 9 wiederum aus zwei Teilsegmenten bzw. Segmentteilen 9a, 9b zusammengesetzt ist.

Die Schutzhaube 7 bzw. deren Segmente 9 und Segmentteile 9a, 9b bestehen jeweils aus einer Vielzahl miteinander verbundener Stahlträger 10, 11. Die einzelnen Stahlträger 10 und 11 sind zu einer netzartigen Struktur miteinander verschweißt. Dabei ist in den Figuren erkennbar, dass jeweils mehrere parallel zueinander angeordnete Längsträger 10 vorgesehen sind. Quer zu den Längsträgern 10 verlaufen kurze Verbindungsträger 11, so dass die Länge der Verbindungsträger 11 zugleich den Abstand der Längsträger 10 definiert. Die Dimensionierung ist dabei so getroffen, dass die verhältnismäßig großen Gebäudetrümmerteile nicht durch das erzeugte "Raster" hindurchfallen können. Die Stahlträger 10, 11 sind als Breitflanschträger mit einer Breite b von etwa 300 mm und einer Höhe h von etwa 1000 mm sowie einer Stegdicke s von 15 bis 20 mm und einer Flanschdicke t von 20 bis 40 mm ausgebildet. Die Längsträger 10 sind im Ausführungsbeispiel beidseitig mit parallel zum Steg verlaufenden Stahlplatten 12 versehen, welche eine Dicke von etwa 50 mm aufweisen.

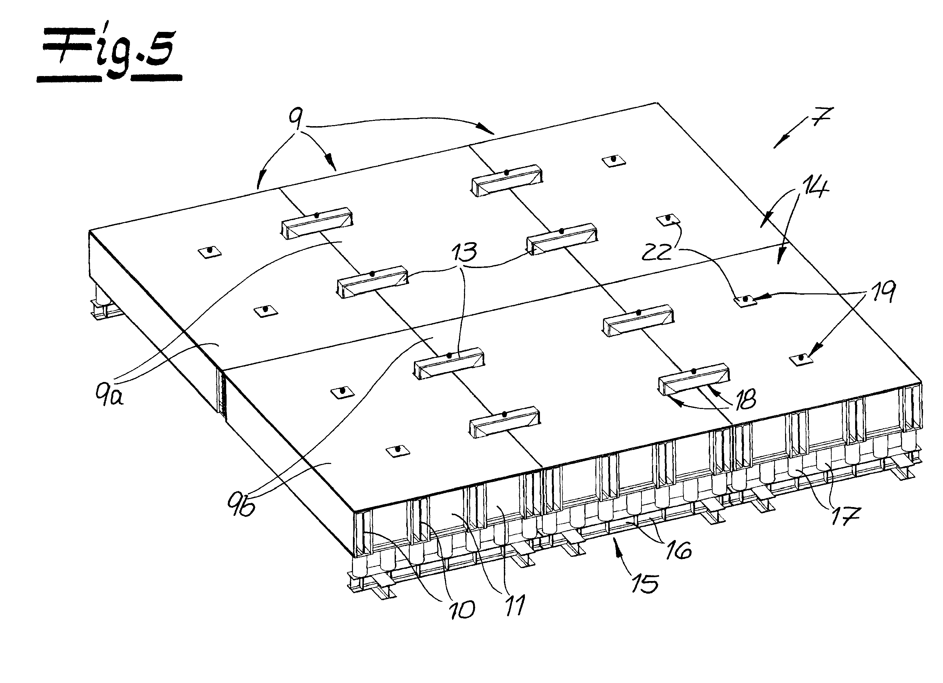

Die Schutzhaube 7 ist im Ausführungsbeispiel mehreckig, nämlich rechteckig oder quadratisch ausgebildet. In Fig. 5 sind die drei zusammengesetzten Segmente 9 erkennbar. Jedes der Segmente 9 besteht aus zwei Teilsegmenten 9a, 9b, welche jeweils in der beschriebenen Gitterstruktur realisiert sind, wobei die beiden Teilsegmente 9a, 9b miteinander zu dem Segment 9 verschraubt sind. Grundsätzlich wäre auch denkbar, die einzelnen Segmente 9 miteinander zu verschrauben. Fig. 5 zeigt jedoch eine besonders bevorzugte Ausführungsform, bei welcher die drei Segmente 9 mittels einsteckbarer Formschlusselemente in Form von U-förmigen Verbindungsklammern 13 miteinander verbunden sind. Diese stabilen Verbindungsklammern 13 sind aus miteinander verschweißten Stahl-Kastenprofilen zusammengesetzt. Im Übrigen ist erkennbar, dass die Schutzhaube 7 mit einer Deckplatte 14 versehen ist, welche eine Dicke von z.B. 20 mm aufweist und als Stahlplatte ausgebildet ist. Sie trägt insgesamt zur Stabilität der Schutzhaube bei, dient jedoch in erster Linie dem Schutz vor herabfallenden Kleinteilen oder kleineren Trümmerteilen. Dabei ist in den Figuren erkennbar, dass nicht eine einheitliche Deckplatte 14 realisiert ist, sondern dass die einzelnen Segmente 9 und auch deren Teilsegmente 9a, 9b jeweils mit einzelnen Deckplatten 14 versehen sind.

Im Übrigen ist eine zusätzliche Stützkonstruktion 15 vorgesehen, welche mehrere Bodenträger 16 aufweist, die z.B. an gegenüberliegenden Seiten des Lagerbeckens auf Flurniveau angeordnet sein können. Auf den Bodenträgern 16 sind über deren Länge verteilt mehrere Stützpfeiler 17 befestigt. Auf diesen Stützpfeilern 17 ist die Schutzhaube 7 angeordnet. Die Bodenträger 16 verlaufen dabei senkrecht zu den Trennebenen zwischen den einzelnen Segmenten 9.

Insgesamt besteht die Schutzhaube aus einer Vielzahl von Breitflanschträgern 10, 11 mit hoher Stabilität, welche einerseits die kinetische Energie des herabfallenden Trümmerteils oder einen Teil der kinetischen Energie aufnehmen. Andererseits verhindern die Breitflanschträger in der beschriebenen Gitterkonstruktion, dass das Gebäudeteil die Schutzhaube durchdringt. Durch die darunter angeordnete Stützkonstruktion 15 kann ein ebenfalls erheblicher Teil der kinetischen Energie aufgenommen werden. Die Stützkonstruktion 15 und insbesondere deren Stützpfeiler 17 können folglich plastisch verformt werden und einen erheblichen Teil der kinetischen Energie aufnehmen.

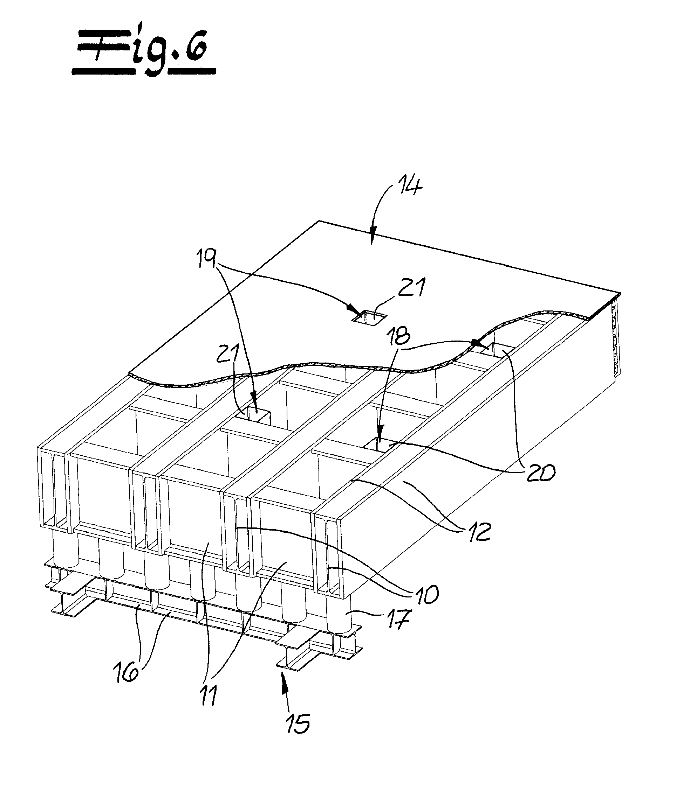

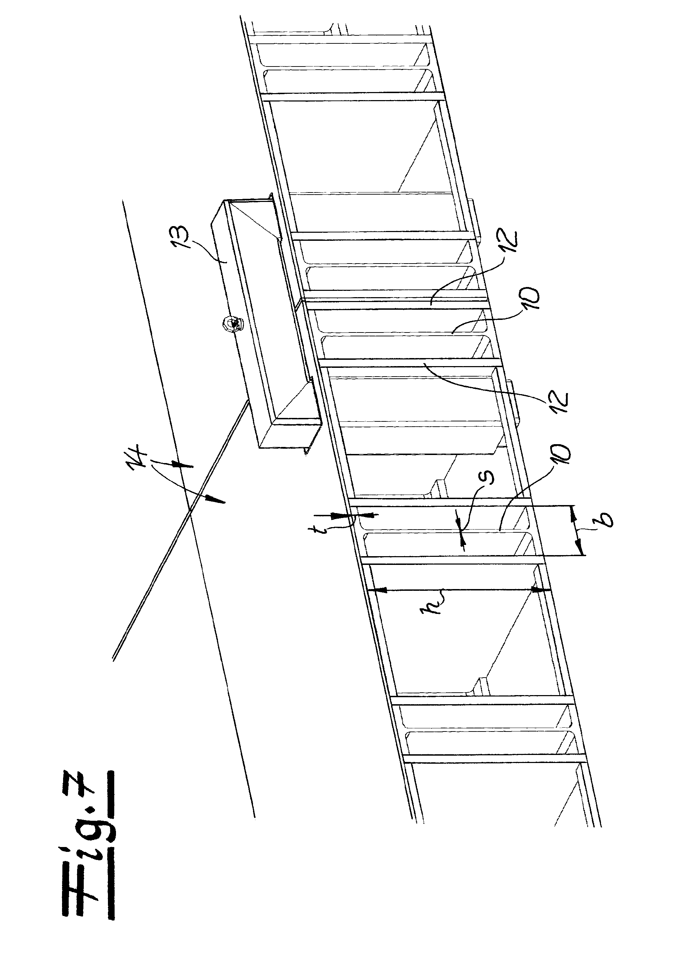

Eine vergleichende Betrachtung der Fig. 5, 6 und 7 zeigt im Übrigen, wie die U-förmige Verbindungsklammern 13 montiert werden und die Segmente 9 miteinander verbinden. Dazu sind Verbindungsöffnungen 18 bzw. Verbindungsaufnahmen 18 vorgesehen, in welche die U-förmigen Verbindungsklammern einsteckbar sind. Dabei liegen jeweils zwei Einstecköffnungen 18 im Bereich der Trennebenen zwischen den Segmenten 9 paarweise gegenüber. Die Einsteckaufnahmen 18 werden von Kastenprofilen 20 gebildet, welche in die Segmente 9 integriert sind.

Außerdem sind mehrere Füllöffnungen vorgesehen, durch welche Wasser in das Becken nachfüllbar ist. Diese Füllöffnungen sind nicht dargestellt. Ferner sind Instrumentierungsöffnungen 19 vorgesehen, welche ebenfalls von Kastenprofilen 21 gebildet werden können und durch welche verschiedene Messvorrichtungen in den Bereich des Lagerbeckens einführbar sind. Dabei kann es sich um Unterwasserkameras, Temperatursensoren, Füllstandsmessgeräte und Analysegeräte für die Wasseranalyse und/oder Gasanalyse handeln. Die Öffnungen 19 sind folglich durch die Kastenprofile 21 als gekammerte Öffnungen ausgebildet. Die Kastenprofile 21 erstrecken sich im Wesentlichen über die Dicke bzw. Höhe der Haube. In dieser Öffnung 19 bzw. Kammern 21 sind Einsteckelemente 22 einsteckbar, die z.B. als Instrumentierungslanzen ausgebildet sind. Sie sind mit den Instrumenten, z.B. Sensoren o. dgl. versehen. Die Einsteckelemente bzw. Lanzen 22 durchgreifen folglich die Kammern 21 und ragen bis unter die Haube vor. Sie können folglich länger als die Kastenprofile 21 sein. Zugleich können diese Einsteckelemente 22 als Verschluss für die Öffnungen 19 ausgebildet sein. Es können aber auch einfache Einsteckelemente als lediglich Verschlüsse ohne Sensoren eingesetzt werden.

Ferner sind in die Schutzhaube 7 nicht dargestellte Wasserstofif-Rekombinatoren integriert, welche in die Gitterstruktur integriert sind.

## Patentansprüche

1. Kerntechnische Anlage, insbesondere Kernreaktoranlage oder Wiederaufarbeitungsanlage, mit einem Gebäude (1) und einem innerhalb des Gebäudes (1) unterhalb einer Gebäudedecke (2) angeordneten Lagerbecken (6), in welchem Brennelemente gelagert sind, wobei unterhalb der Gebäudedecke (2) und oberhalb des Lagerbeckens (6) eine das Lagerbecken (6) überspannende Schutzhaube (7) angeordnet ist, welche das Lagerbecken (6) und die darin gelagerten Brennelemente im Falle einer Beschädigung des Gebäudes (1) vor herabfallenden Trümmerteilen, insbesondere Gebäudetrümmerteilen schützt,
wobei die Schutzhaube (7) in der Draufsicht mehrteilig ausgebildet ist und aus zumindest zwei einzeln transportierbaren Segmenten (9) besteht, welche innerhalb des Gebäudes zu der Schutzhaube (7) zusammensetzbar sind,
wobei die Segmente (9) aus einer Vielzahl miteinander verschweißter und/oder verschraubter Stahlträger (10, 11) bestehen und
wobei die Schutzhaube (7) auf der Oberseite und/oder der Unterseite der Stahlträger (10, 11) eine oder mehrere die Stahlträger (10, 11) überspannende Deckplatte (14) aufweist.

2. Anlage nach Anspruch 1, **dadurch gekennzeichnet, dass** die Schutzhaube (7) im Bereich eines Beckenflures (8) angeordnet ist und eine obere Öffnung des Lagerbeckens abdeckt, wobei der Beckenflur von einer oberhalb des Lagerbeckens angeordneten, befahrbaren Gebäudeebene gebildet wird.

3. Anlage nach Anspruch 1 oder 2, **dadurch gekennzeichnet, dass** die Schutzhaube (7) aus zumindest drei einzeln transportierbaren Segmenten (9) besteht, welche innerhalb des Gebäudes zu der Schutzhaube (7) zusammensetzbar sind.

4. Anlage nach einem der Ansprüche 1 bis 3, **dadurch gekennzeichnet, dass** die einzelnen Segmente (7) jeweils aus mehreren Segmentteilen (9a, 9b) zusammengesetzt sind, wobei die Segmentteile (9a, 9b) vorzugsweise miteinander zu einem Segment (9) verschraubt sind.

5. Anlage nach Anspruch 4, **dadurch gekennzeichnet, dass** die Segmentteile (9a, 9b) der Segmente (9) aus einer Vielzahl miteinander verschweißter und/oder verschraubter Stahlträger (10, 11) bestehen.

6. Anlage nach einem der Ansprüche 1 bis 5, **dadurch gekennzeichnet, dass** mehrere parallel zueinander angeordnete Längsträger (10) vorgesehen sind, wobei jeweils zwei benachbarte Längsträger (10) über mehrere quer dazu verlaufende Verbindungsträger (11) miteinander verbunden sind.

7. Anlage nach einem der Ansprüche 1 bis 6, **dadurch gekennzeichnet, dass** die Stahlträger (10, 11) als I-Träger bzw. Doppel-T-Träger, vorzugsweise Breitflanschträger ausgebildet sind, welche vorzugsweise eine Breite b von 200 bis 600 mm, z. B. 300 mm und eine Höhe h von 700 bis 1.200 mm, z. B. 1000 mm aufweisen.

8. Anlage nach einem der Ansprüche 1 bis 7, **dadurch gekennzeichnet, dass** die Deckplatte (14) als Stahlplatte mit einer Dicke von z. B. 5 mm bis 50 mm, vorzugsweise 10 mm bis 30 mm ausgebildet ist.

9. Anlage nach einem der Ansprüche 1 bis 8, **dadurch gekennzeichnet, dass** die Schutzhaube (7) unterseitig eine Stützkonstruktion (15) aufweist oder auf Stützkonstruktion (15) aufgesetzt ist, welche die Öffnung des Lagerbeckens zumindest bereichsweise umgibt.

10. Anlage nach einem der Ansprüche 1 bis 9, **dadurch gekennzeichnet, dass** die einzelnen Segmente (9) der Schutzhaube mittels in die Segmente (7) einsteckbaren Formschlusselementen (13) verbindbar sind.

11. Anlage nach Anspruch 10, **dadurch gekennzeichnet, dass** die Formschlusselemente (13) als U-förmige Verbindungsklammern ausgebildet sind.

12. Anlage nach Anspruch 10 oder 11, **dadurch gekennzeichnet, dass** die Segmente (9) Einstecköffnungen oder Einsteckkammern (18) für die Verbindungsklammern (13) aufweisen.

13. Anlage nach Anspruch 11 oder 12, **dadurch gekennzeichnet, dass** die Verbindungsklammern (13) von miteinander verschweißten Stahlprofilen, z. B. Kastenprofilen, oder von einstückigen Klammern aus massivem Stahl gebildet werden.

14. Anlage nach einem der Ansprüche 1 bis 13, **dadurch gekennzeichnet, dass** die Schutzhaube (7), z. B. deren Segmente (9) mit Füllöffnungen versehen ist, durch welche das Lagerbecken mit Wasser befüllbar ist.

15. Anlage nach einem der Ansprüche 1 bis 14, **dadurch gekennzeichnet, dass** die Schutzhaube (7), z. B. deren Segmente (9) mit einem oder mehreren Wasserstoff-Rekombinatoren ausgerüstet ist, welche vorzugsweise in das Innere der Schutzhaube integriert sind.

16. Anlage nach einem der Ansprüche 1 bis 15, **dadurch gekennzeichnet, dass** die Schutzhaube (7), z. B. deren Segmente (9) mit Instrumentierungsöffnungen (19) versehen ist, in welche bzw. durch welche Messvorrichtungen einführbar sind.

17. Anlage nach einem der Ansprüche 14 bis 16, **dadurch gekennzeichnet, dass** die Öffnungen (18, 19) als gekammerte Öffnungen ausgebildet sind, welche z. B. von in die Schutzhaube integrierten und diese durchgreifenden Kastenprofilen (20, 21) gebildet werden, in welche vorzugsweise jeweils ein Einsteckelement (22) einsteckbar ist, welches z. B. mit einer oder mehreren Messvorrichtungen ausgerüstet ist.

18. Anlage nach einem der Ansprüche 1 bis 17, **dadurch gekennzeichnet, dass** die Deckplatte (14) mit Durchbrechungen versehen ist, welche mit den Öffnungen fluchten bzw. die Öffnungen bilden.

## Claims

1. A nuclear plant, in particular a nuclear reactor plant or a reprocessing plant, with a building (1) and a storage pool (6) arranged within the building (1) underneath a ceiling (2) of the building, in which pool fuel elements are stored, wherein a protective cover (7) spanning the storage pool (6) is arranged underneath the building ceiling (2) and above the storage pool (6), which protective cover protects the storage pool (6) and the fuel elements stored in the latter, in the event of damage to the building (1) from falling debris, in particular building debris, wherein
in plan view the protective cover (7) is designed in multiple parts, and consists of at least two individually transportable segments (9), which can be assembled inside the building to form the protective cover (7), wherein
the segments (9) consist of a multiplicity of steel beams (10, 11) that are welded and/or bolted together, and wherein
on the upper face and/or the lower face of the steel beams (10, 11) the protective cover (7) has a cover plate (14) spanning one or a plurality of the steel beams (10, 11).

2. The plant in accordance with claim 1, **characterised in that** the protective cover (7) is arranged in the vicinity of a pool hall (8), and covers an upper opening of the storage pool, wherein the pool hall is built at an accessible building level arranged above the storage pool.

3. The plant in accordance with claim 1 or 2, **characterised in that** the protective cover (7) consists of at least three individually transportable segments (9), which can be assembled inside the building to form the protective cover (7).

4. The plant in accordance with one of the claims 1 to 3, **characterised in that** each of the individual segments (9) is composed of a plurality of segment sections (9a, 9b), wherein the segment sections (9a, 9b) are preferably bolted together to form a segment (9).

5. The plant in accordance with claim 4, **characterised in that** the segment sections (9a, 9b) of the segments (9) consist of a multiplicity of steel beams (10, 11) that are welded and/or bolted together.

6. The plant in accordance with one of the claims 1 to 5, **characterised in that** a plurality of longitudinal beams (10) arranged parallel to one another is provided, wherein each pair of adjacent longitudinal beams (10) is connected together by a plurality of connecting beams (11) running transverse to the former.

7. The plant in accordance with one of the claims 1 to 6, **characterised in that** the steel beams (10, 11) are designed as I-beams, or double T-beams, preferably wide flange beams, which preferably have a width b of 200 to 600 mm, e.g. 300 mm, and a height h of 700 to 1,200 mm, e.g. 1,000 mm.

8. The plant in accordance with one of the claims 1 to 7, **characterised in that** the cover plate (14) is designed as a steel plate with a thickness of e.g. 5 mm to 50 mm, preferably 10 mm to 30 mm.

9. The plant in accordance with one of the claims 1 to 8, **characterised in that** on its lower face the protective cover (7) has a supporting structure (15), or is positioned on a supporting structure (15), which surrounds at least some regions of the opening of the storage pool.

10. The plant in accordance with one of the claims 1 to 9, **characterised in that** the individual segments (9) of the protective cover can be connected together by means of form-fit elements (13) that can be inserted into the segments (7).

11. The plant in accordance with claim 10, **characterised in that** the form-fit elements (13) are designed as U-shaped connecting clamps.

12. The plant in accordance with claim 10 or 11, **characterised in that** the segments (9) have insert openings or insert chambers (18) for the connecting clamps (13).

13. The plant in accordance with claim 11 or 12, **characterised in that** the connecting clamps (13) are formed from steel profiles, e.g. box profiles, that are welded together, or from one-piece clamps of solid steel.

14. The plant in accordance with one of the claims 1 to 13, **characterised in that** the protective cover (7), e.g. its segments (9), is provided with filling openings, through which the storage pool can be filled with water.

15. The plant in accordance with one of the claims 1 to 14, **characterised in that** the protective cover (7), e.g. its segments (9), is equipped with one or a plurality of hydrogen recombination units, which are preferably integrated into the interior of the protective cover.

16. The plant in accordance with one of the claims 1 to 15, **characterised in that** the protective cover (7), e.g. its segments (9), is provided with instrumentation openings, into which, or through which, measurement devices can be introduced.

17. The plant in accordance with one of the claims 14 to 16, **characterised in that** the openings (18, 19) are designed as chambered openings, which are e.g. formed from box profiles (20, 21) integrated into the protective cover and passing through the latter, into each of which an insert element (22) can preferably be inserted, which is fitted with e.g. one or a plurality of measurement devices.

18. The plant in accordance with one of the claims 1 to 17, **characterised in that** the cover plate (14) is provided with discontinuities, which align with the openings, or form the openings.

## Revendications

1. Installation technique nucléaire, en particulier installation de réacteur nucléaire ou installation de retraitement, comportant un bâtiment (1) et un bassin de stockage (6) disposé sous un plafond du bâtiment (2), et dans lequel des éléments de combustion sont stockés, une hotte protectrice (7) recouvrant le bassin de stockage (6) étant disposée au-dessous du plafond du bâtiment (2) et au-dessus du bassin de stockage (6), laquelle hotte protège le bassin de stockage (6) et les éléments de combustion (1) stockés dedans des chutes de morceaux de gravats, en particulier des chutes de morceaux de gravats provenant du bâtiment, en cas d'endommagement du bâtiment (1),
la hotte protectrice (7) vue du dessus étant constituée de plusieurs pièces et consistant en au moins deux segments transportables individuellement (9) qui peuvent être assemblés dans le bâtiment pour former la hotte protectrice (7),
les segments (9) étant composés d'une multitude de supports en acier soudés et/ou vissés ensemble (10, 11) et
la hotte protectrice (7) présentant, sur la face supérieure et/ou la face inférieure des supports en acier (10, 11), une ou plusieurs plaques de recouvrement (14) chevauchant les supports en acier (10, 11).

2. Installation selon la revendication 1, **caractérisée en ce que** la hotte protectrice (7) est disposée au niveau d'un fond du bassin (8) et recouvre une ouverture supérieure du bassin de stockage, le fond du bassin étant constitué d'un plan de bâtiment disposé au-dessus du bassin de stockage et praticable.

3. Installation selon la revendication 1 ou 2, **caractérisée en ce que** la hotte protectrice (7) est composée d'au moins trois segments transportables individuellement (9) qui peuvent être assemblés dans le bâtiment pour former la hotte protectrice (7).

4. Installation selon une des revendications 1 à 3, **caractérisée en ce que** les segments individuels (7) sont composés respectivement de plusieurs morceaux de segments (9a, 9b), les morceaux de segments (9a, 9b) étant de préférence vissés ensemble pour former un segment (9).

5. Installation selon la revendication 4, **caractérisée en ce que** les morceaux de segments (9a, 9b) des segments (9) sont composés d'une multitude de supports en acier soudés et/ou vissés ensemble (10, 11).

6. Installation selon une des revendications 1 à 5, **caractérisée en ce qu'**il est prévu plusieurs supports longitudinaux (10) disposés parallèlement les uns aux autres (10), deux supports longitudinaux voisins (11) étant respectivement reliés entre eux par plusieurs supports de connexion (11) s'étendant parallèlement à ceux-ci.

7. Installation selon une des revendications 1 à 6, **caractérisée en ce que** les supports en acier (10, 11) sont réalisés sous forme de supports en I ou de supports en double T, de préférence de supports à bride large qui ont de préférence une largeur b de 200 à 600 mm, par exemple 300 mm, et une hauteur h de 700 à 1 200 mm, par exemple 1000 mm.

8. Installation selon une des revendications 1 à 7, **caractérisée en ce que** la plaque de recouvrement (14) est réalisée sous forme d'une plaque en acier d'une épaisseur de 5 mm à 50 mm, de préférence 10 mm à 30 mm.

9. Installation selon une des revendications 1 à 8, **caractérisée en ce que** la hotte protectrice (7) présente en dessous une structure de soutien (15) ou est posée sur une structure de soutien (15) qui entoure du moins par endroits l'ouverture du bassin de stockage.

10. Installation selon une des revendications 1 à 9, **caractérisée en ce que** les segments individuels (9) de la hotte protectrice peuvent être connectés au moyen d'éléments à correspondance géométrique (13) enfichables dans les segments (7).

11. Installation selon la revendication 10, **caractérisée en ce que** les éléments à correspondance géométrique (13) sont réalisés sous forme d'attaches de connexion en forme de U.

12. Installation selon la revendication 10 ou 11, **caractérisée en ce que** les segments (9) présentent des ouvertures de fichage ou des cellules de fichage (18) pour les attaches de connexion (13).

13. Installation selon la revendication 11 ou 12, **caractérisée en ce que** les attaches de connexion (13) sont constituées de profilés en acier soudés ensemble, par exemple d'attaches monobloc en acier massif.

14. Installation selon une des revendications 1 à 13, **caractérisée en ce que** la hotte protectrice (7), 1000), par exemple ses segments (9), est pourvue d'orifices de remplissage par lesquels le bassin de stockage peut être rempli d'eau.

15. Installation selon une des revendications 1 à 14, **caractérisé en ce que** la hotte protectrice (7), par exemple ses segments (9), est pourvue d'un ou plusieurs recombineurs d'hydrogène qui sont de préférence intégrés dans la hotte protectrice.

16. Installation selon une des revendications 1 à 14, **caractérisée en ce que** la hotte protectrice (7), par exemple ses segments (9), est pourvue d'ouvertures pour des instruments (19) dans lesquelles ou à travers lesquelles les dispositifs de mesure peuvent être introduits.

17. Installation selon une des revendications 14 à 16, **caractérisée en ce que** les ouvertures (18, 19) sont réalisées sous forme d'ouvertures situées dans des chambres qui sont par exemple constituées par des profilés de caissons (20, 21) intégrés dans la hotte protectrice et la traversent et dans lesquels peut être fiché respectivement un élément enfichable (22) qui est équipé par exemple d'un ou plusieurs dispositifs de mesure.

18. Installation selon une des revendications 1 à 17, **caractérisée en ce que** la plaque de recouvrement (14) est pourvue de percées qui sont alignées avec les ouvertures ou forment les ouvertures.
